# EUROPÄISCHE PATENTANMELDUNG

(11) **EP 2 098 646 A1**
(43) Veröffentlichungstag der Anmeldung: **09.09.2009**
(21) Anmeldenummer: 08171552.6
(22) Anmeldetag: 12.12.2008
(51) Int. Cl.: E03B 7/07, G01F 15/18

(54) **Druckminderer-Filter-Anordnung mit Leckageschutz**

(30) Priorität: 04.03.2008 DE 202008003055 U
(71) Anmelder: HANS SASSERATH & CO KG, 41352 Korschenbroich (DE)
(72) Erfinder: Hecking, Willi, 41372, Niederkrüchten-Elmpt (DE)
(74) Vertreter: Weisse, Renate

(57) **Zusammenfassung**

Eine Strömungsmessanordnung (16) zum Erfassen von untypischen Strömungszuständen für eine Druckminderer-Filter-Anordnung (10), die mit einem Einlass (20) und einem Auslass (22) und einem strömungsmäßig zwischen Einlass (20) und Auslass (22) angeordneten Filter (110) in einer Filteranordnung (104, 106, 110) ausgestattet ist und mit einem in einem Armaturengehäuse (56) angeordneten Druckminderer (68), ist **dadurch gekennzeichnet, dass** die Strömungsmessanordnung ein separates Modul (16) bildet, das zwischen das Armaturengehäuse (30, 48, 56) und die Filteranordnung (104, 106, 110) einsetzbar ist.

## Beschreibung

### Technisches Gebiet

Die Erfindung betrifft eine Strömungsmessanordnung zum Erfassen von untypischen Strömungszuständen für eine Druckminderer-Filter-Anordnung, die mit einem Einlass und einem Auslass und einem strömungsmäßig zwischen Einlass und Auslass angeordneten Filter in einer Filteranordnung ausgestattet ist und mit einem in einem Armaturengehäuse angeordneten Druckminderer.

Die Erfindung betrifft ferner eine Druckminderer-Filter-Anordnung mit einem Einlass und einem Auslass und einem strömungsmäßig zwischen Einlass und Auslass angeordneten Filter in einer Filteranordnung und einem in einem Armaturengehäuse angeordneten Druckminderer.

Eine solche Anordnung wird in Hauswasserinstallationen verwendet. Das von einer Versorgungsleitung für ein Gebäude zur Verfügtung gestellte Trinkwasser wird gefiltert und auf einen gleichmäßigen Druck geregelt. Wenn Wasser an einer Zapfstelle entnommen wird, ändert sich der Strömungszustand. Für eine kurze Zeit fließt Wasser durch die Anordnung. Unter untypischen Strömungszustände werden solche Zustände verstanden, die bei normalem Betrieb nicht auftreten. Ein Beispiel für solche Strömungszustände ist ein kleines Leck. Bei Auftreten eines Lecks fließt ständig eine geringe Wassermenge. Ein anderes Beispiel für solche untypischen Strömungszustände ist ein Wasserrohrbruch. Dann fließen in sehr kurzer Zeit sehr große Wassermengen. Als Leckageschutz wird das Erfassen solcher untypischen Strömungszustände verstanden und das Ergreifen geeigneter Maßnahmen.

### Stand der Technik

Druckminderer-Filteranordnungen ohne Leckageschutz sind vielfältig bekannt. Zum Warten des Filters ist vor der Anordnung eine Absperrung vorgesehen. Die Filter sind häufig als sogenannter Rückspülfilter ausgebildet. Dann wird durch eine geeignete Ventilschaltung die Wasserströmung in umgekehrtere Richtung durch den Filter geleitet. Dabei lösen sich in dem Filter haftende Partikel und werden über einen Ablauf entsorgt.

DE 10 2005 00 009 A1 ist eine Filteranordnung bekannt, welche einen integrierten Leckageschutz aufweist. Die Anordnung verwendet einen Rückspülfilter und eine unmittelbar vor dem Rückspülfilter angeordnete Turbine. Jede Wasserströmung durch den Filter wird mit der Turbine erfasst und ausgewertet.

### Offenbarung der Erfindung

Es ist Aufgabe der Erfindung, die Herstellungskosten der eingangs genannten Druckminderer-Filteranordnung zu verringern und die Einsatzmöglichkeiten für eine Anordnung der eingangs genannten Art zu erhöhen.

Erfindungsgemäß wird die Aufgabe dadurch gelöst, dass die Strömungsmessanordnung ein separates Modul bildet, das zwischen das Armaturengehäuse und die Filteranordnung einsetzbar ist. Dadurch kann die gleiche Anordnung in zwei verschiedenen Varianten eingesetzt werden: Die Druckminderer-Filter-Anordnung kann mit oder ohne Strömungsmessanordnung verwendet werden. Dies ermöglicht die Verwendung der gleichen Werkzeuge und Herstellungsabfolgen für die Komponenten beider Varianten. Dadurch werden die Herstellungskosten verringert. Bei der Lagerhaltung müssen zusätzlich zu den Druckminderer-Filter-Anordnungen nur die vergleichsweise kleinen Strömungsmessanordnungen vorgehalten werden. Dies verringert die Kosten bei der Lagerhaltung und im Vertrieb. Besonderer Vorteil der Erfindung ist es, dass die Druckminderer-Filter-Anordnungen mit einer Strömungsmessanordnung nachgerüstet werden können, ohne dass die bestehende Struktur verändert werden muß.

Die erfindungsgemäße Druckminderer-Filter-Anordnung ist dabei insbesondere so ausgebildet, dass die Filteranordnung einen Anschluss aufweist, mit dem sie modulartig mit einem hierfür vorgesehenen Anschluss an das Armaturengehäuse anschließbar ist; und eine Strömungsmessanordnung zur Erfassung untypischer Strömungszustände modulartig zwischen dem Anschluss an der Filteranordnung und dem Anschluss an dem Armaturengehäuse einsetzbar ist.

Die erfindungsgemäße Strömungsmessanordnung und Druckminderer-Filter-Anordnung bilden einen Druckminderer-Filter-Modulbausatz enthaltend:
(a) ein erstes Modul mit einem Druckmindereregehäuse und einem Druckminderer;
(b) ein zweites Modul mit einer Filteranordnung und
(c) ein drittes Modul mit einer Anordnung zum Erfassen von untypischen Strömungszuständen, wobei
(d) das dritte Modul zwischen dem ersten und dem zweiten Modul anschließbar ist, und
(e) das zweite ohne das dritte Modul direkt an das erste Modul anschließbar ist.

Vorzugsweise ist in der Strömungsmessanordnung eine strömungsmessende Turbine vorgesehen. Die Drehzahl und Drehrate der Turbine liefert ein Maß für die Strömungsgeschwindigkeit und das Strömungsvolumen durch die Anordnung. Diese ist zur Erfassung untypischer Strömungszustände geeignet. Sie ermöglicht aber auch die Messung des Druckabfalls in dem Filter. So kann etwa nach einem bestimmten Druckabfall oder einem bestimmten Strömungsvolumen eine automatische Rückspülung ausgelöst werden. Insofern eignet sich die Strömungsmessanordnung für verschiedene Zwecke. Es ist auch jede andere Art der Strömungsmessung geeignet. Die Erfindung ist nicht auf die Verwendung einer Turbine beschränkt.

Vorzugsweise ist die Turbine in ihrem äußeren Bereich mit einem Magnet versehen, der mit einem Sensor zusammenwirkt, wobei der Sensor bei Vorbeistreichen des Magneten ein auswertbares, elektrisches Signal erzeugt. Das elektrische Signal kann von einem Hall-Sensor oder einem Reed-Kontakt erzeugt werden. Es erlaubt mit einer geeigneten Auswerteelektronik die Erfassung von untypischen Strömungszuständen. So werden maximale Fließdauern, Fließvolumina etc. festgelegt, die von der Verwendungsart abhängen. In einem großen Gebäude sind hier andere Grenzwerte einzustellen, als etwa in einem Einfamilienhaus.

Eine besonders kompakte Anordnung ergibt sich, wenn ein erster Anschluss zum Verbinden mit einem Anschluss im Armaturengehäuse und ein koaxialer zweiter Anschluss zum Verbinden mit der Filteranordnung vorgesehen sind. Die Strömungsmessanordnung wird also quasi kolinear zwischen das Armaturengehäuse und die Filteranordnung gesteckt.

In einer besonders bevorzugten Ausgestaltung der Erfindung ist koaxial zwischen dem ersten und dem zweiten Anschluss angeordneter Rückflussverhinderer vorgesehen, welcher in Auslassrichtung öffnet, und ein den Rückflussverhinderer umgehender Bypasskanal, der im äußeren Bereich der Turbine mündet, so dass die Turbine von einer durch den Bypasskanal erfolgten Teilströmung die Turbine antreibbar ist. Der Rückflussverhinderer öffnet erst mit größeren Strömungsraten. Um jedoch auch geringe Strömungen, wie sie bei sehr kleinen Lecks auftreten, zu erfassen, fließt eine sehr kleine Teilströmung zunächst durch den Bypass und treibt die Turbine an, bevor der Rückflussverhinderer öffnet. Der Rückflussverhinderer ist vorzugsweise als Patrone ausgebildet.

In einer besonders bevorzugten Ausgestaltung der Erfindung sind in der Strömungsmessanordnung Mittel zur Steuerung eines an dem Armaturengehäuse vorgesehenen Absperrventils vorgesehen, mit welchen die Strömung durch die Anordnung insbesondere bei Auftreten untypischer Strömungszustände absperrbar ist. Die Strömungsmessanordnung dient dann nicht nur der Messung, sondern auch der Betätigung eines Absperrventils.

In einer bevorzugten Ausgestaltung der Druckminderer-Filter-Anordnung ist der Filter als Rückspülfilter mit einem Ablauf und Ablaufventil ausgebildet ist, und die Anordnung ist von einem ersten Zustand, bei welcher das Wasser vom Einlass durch den Filter zum Auslass fließt, in einen zweiten Zustand schaltbar, bei welcher das Wasser bei geöffnetem Ablaufventil vom Einlass in umgekehrter Richtung durch den Filter zum Ablauf fließt.

Vorzugsweise ist die Druckminderer-Filter-Anordnung derart ausgestaltet, dass
(a) der Filter zusammen mit einer Hülse in einer Filtertasse angeordnet ist, so dass zwischen der Hülse und der Filtertasse ein äußerer Ringraum gebildet ist und zwischen dem Filtermaterial und der Hülse ein innerer Ringraum gebildet ist, und
(b) der in dem Gehäuse vorgesehene Anschluss einen zentralen Einlassanschluss aufweist, über den eine Verbindung zwischen Auslass und inneren Ringraum herstellbar ist und einen um den zentralen Einlassanschluss herum angeordneten, ringförmigen Auslassanschluss, über den eine Verbindung zwischen Einlass und äußerem Ringraum in der Filtertasse herstellbar ist.

Dadurch wird eine besonders kompakte Anordnung erreicht.

Bei der Druckminderer-Filter-Anordnung kann das Armaturengehäuse eine Absperrung aufweisen, welche einerseits manuell betätigbar ist und welche andererseits von einem an der Strömungsmessanordnung vorgesehenen Betätigungselement betätigbar ist. Dann wird mit der Strömungsmessanordnung gleichzeitig ein untypischer Strömungszustand erfasst und eine Absperrung ausgelöst.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig. 1: ist eine perspektivische Darstellung einer Druckminderer-Filter-Anordnung mit einem eingebauten Leckageschutz in zusammengesetztem Zustand.
- Fig.2: ist ein Längsschnitt durch die Anordnung aus Figur 1.
- Fig.3: ist eine perspektivische Darstellung einer Druckminderer-Filter-Anordnung ohne Leckageschutz in zusammengesetztem Zustand.
- Fig.4: ist ein Längsschnitt durch die Anordnung aus Fig.3.
- Fig.5: ist eine Explosionsdarstellung der Anordnung aus Figur 1 und 2.
- Fig.6: zeigt den Verlauf der Strömung durch die Filter- und Strömungsmessanordnung.
- Fig.7: ist ein Querschnitt durch ein Leckageschutz-Modul im Detail.
- Fig.8: ist eine perspektivische Ansicht des Inneren des Filter-Modulss.
- Fig.9: ist eine perspektivische Ansicht des Inneren des Filter-Moduls aus einer anderen Perspektive.

### Beschreibung des Ausführungsbeispiels

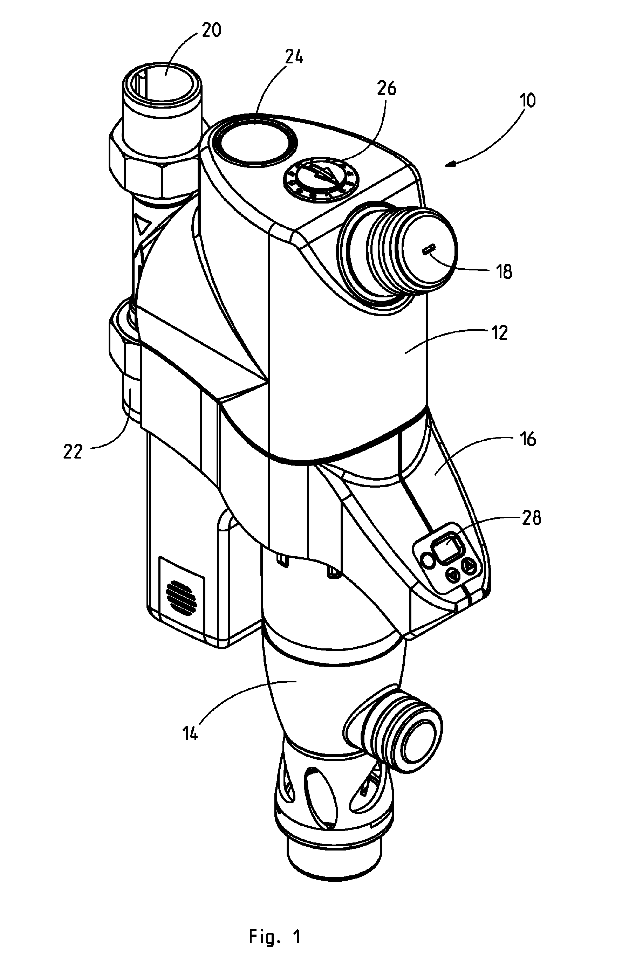

Figur 1 zeigt eine allgemein mit 10 bezeichnete Druckminderer-Filter-Anordnung mit Leckageschutz. Die Anordnung 10 umfasst drei Module: ein Anschlussmodul 12 mit einem darin vorgesehenen Druckminderer 18, ein Leckageschutzmodul 16 und ein Filtermodul 14. Das Leckageschutzmodul 16 ist zwischen dem Anschlussmodul 12 und dem Filtermodul 14 angeordnet.

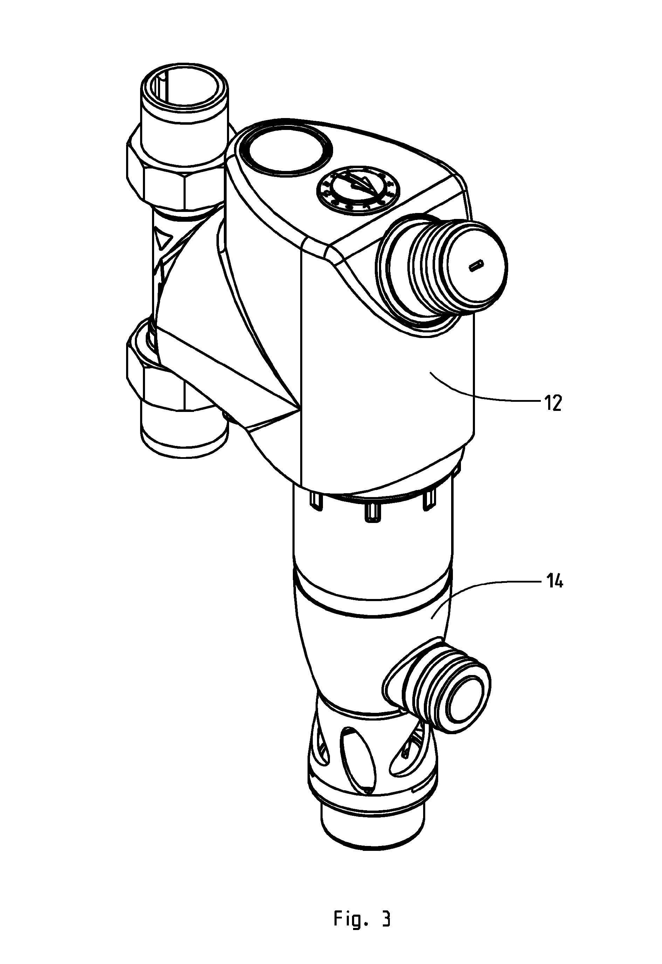

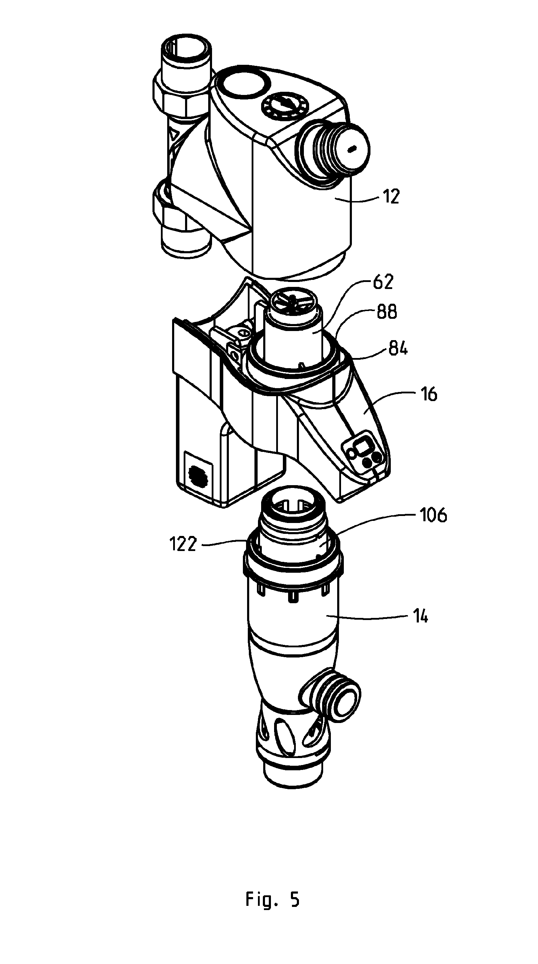

Figur 5 zeigt in einer Explosionsdarstellung, wie die drei Module zusammengesetzt sind. Das Leckageschutzmodul 16 kann als Ganzes aus der Anordnung 10 herausgenommen werden. Das Anschlussmodul 12 und das Filtermodul 14 können dann ohne Leckageschutz wieder zusammengesetzt werden. Diese Situation ist in Figur 3 dargestellt.

Die Anordnung 10 weist an dem Anschlussmodul 12 einen Einlass 20 und einen Auslass 22 auf (Fig.1). Mit Einlass 20 und Auslass 22 wird die Anordnung in eine nicht dargestellte, vertikale Rohrleitung so eingebaut, dass die noch zu beschreibenden Bedienungselemente und Displays 24, 26 und 28 leicht zugänglich sind.

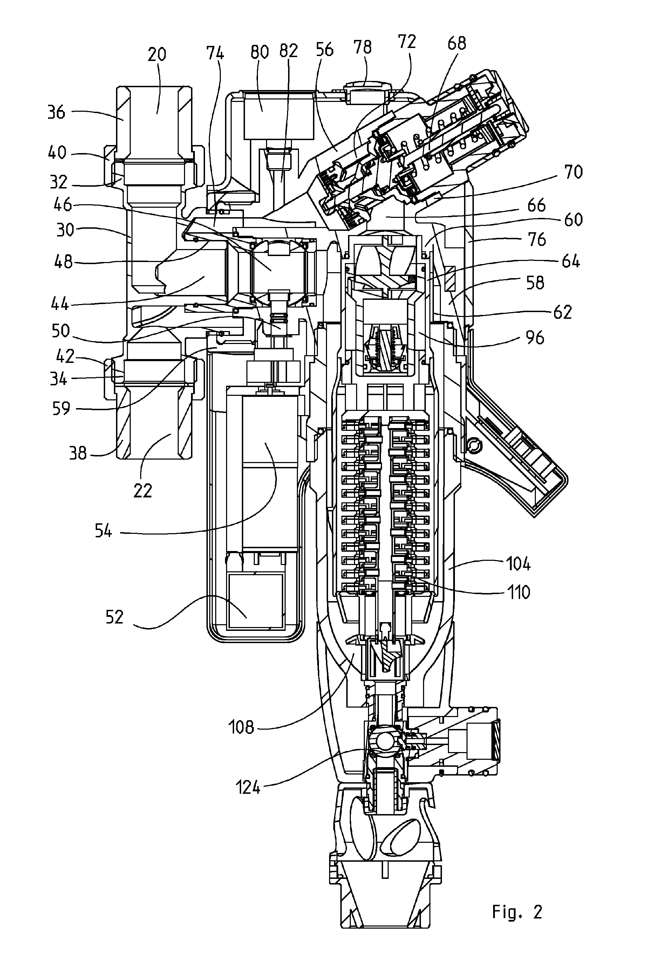

Das Anschlussmodul 12 weist ein dreiteiliges Armaturengehäuse 30, 48, 56 auf. Dies ist in Figur 2 dargestellt. Der Einlassteil 30 des Armaturengehäuses weist einen Einlassstutzen 32 und einen dazu koaxialen Auslassstutzen 34 auf. An dem Einlassstutzen 32 ist ein Verbindungsrohrstück 36 mit einer Überwurfmutter 40 verbunden. An dem Auslassstutzen 34 ist ein Verbindungsrohrstück 38 mit einer Überwurfmutter 42 verbunden.

Das Armaturengehäuse bildet mit dem Eingangsteil 30 einen Eingangskanal 44. Der Eingangskanal 44 verläuft im rechten Winkel vom Einlass 20 in einen absperrbaren Mittelteil 48 des Armaturengehäuses 30. Der Mittelteil 48 ist rohrförmig und mit einer Dichtung auf den den Einlasskanal 44 bildenden Teil des Armaturengehäuses 30 aufgesteckt.

In dem Mittelteil 48 ist ein Kugelhahn 46 vorgesehen. Der Kugelhahn 46 weist eine Zapfen 50 auf. Über den Zapfen 50 ist die Kugel des Kugelhahns 46 drehbar. Hierzu wird in der in Figur 2 dargestellten Variante ein Motor 54 mit einer Motorsteuerung 52 verwendet.

Auf den Mittelteil 48 und den Eingangsteil 30 des Armaturengehäuses ist ein Anschlussteil 56 aufgesteckt und mit einer Überwurfmutter 59 festgezogen. Das Anschlussteil 56 bildet einen äußeren Anschlussstutzen 58 zum Anschließen entweder des Leckageschutzmoduls 16 oder des Filtermoduls 14.

Innerhalb des äußeren Anschlussstutzens 58 ist ein koaxialer, innerer Anschlussstutzen 60 in dem Anschlussteil 56 gebildet. An diesem inneren Anschlussstutzen 60 liegt eine Hülse 62 eines weiteren Moduls an, die nachstehend noch beschrieben wird. Zwischen der Hülse 62 und der Innenwandung des äußeren Anschlussstutzens 58 ist ein Ringraum 64 gebildet. Der Ringraum 64 ist mit dem Eingangskanal 44 verbunden. Der Bereich innerhalb der Hülse 62 mündet in einer Öffnung 66 in dem Anschlussteil 56. Die Öffnung 66 bildet eine Verbindung mit dem Auslass 22. Der Wasserdruck in diesem Bereich wird von einem Druckminderer 68 kontrolliert. Der Aufbau und die Funktionsweise von Druckminderern sind dem Fachmann allgemein bekannt und brauchen hier daher nicht näher erläutert werden. Der Druckminderer 68 ist patronenartig ausgebildet. Er ist in eine schräg verlaufende Gehäusebohrung 72 in einem Stutzen 70 des Anschlussteils 56 eingesteckt.

Die Gehäusebohrung 72 ist mit einem Ringraum 74 verbunden. Der Ringraum 74 erstreckt sich um das Mittelteil 48 herum. Der Ringraum 74 ist schließlich mit dem Auslass 22 verbunden. Insebsondere der Mittelteil 48 und das Anschlussteil 56 sind von einer Gehäuseabdeckung 76 abgedeckt. Der Stutzen 70 ragt dabei durch eine in der Gehäuseabdeckung 76 vorgesehenen Öffnung. Die Gehäuseabdeckung 76 ist mit einer Datumsanzeige 78 versehen. Die Datumsanzeige 78 ist von Hand einstellbar und dient der Einstellung des nächsten Wartungszeitpunkts. Der hinter dem Druckminderer 68 herrschende Wasserdruck (Ausgangsdruck) wird an einem Manometer 80 angezeigt. Die Anzeige des Manometers 80 ist ebenfalls in die Gehäuseabdeckung integriert. Zur Druckmessung ist ein Kanal 82 vorgesehen, der die Verbindung zwischen dem Manometer 80 und dem äußeren Ringraum 74 herstellt.

Der bisher beschriebene Teil betrifft im wesentlichen das Anschlussmodul 12. In Figur 2 ist gezeigt, wie ein Leckageschutzmodul 16 an das Anschlussmodul 12 angeschlossen ist.

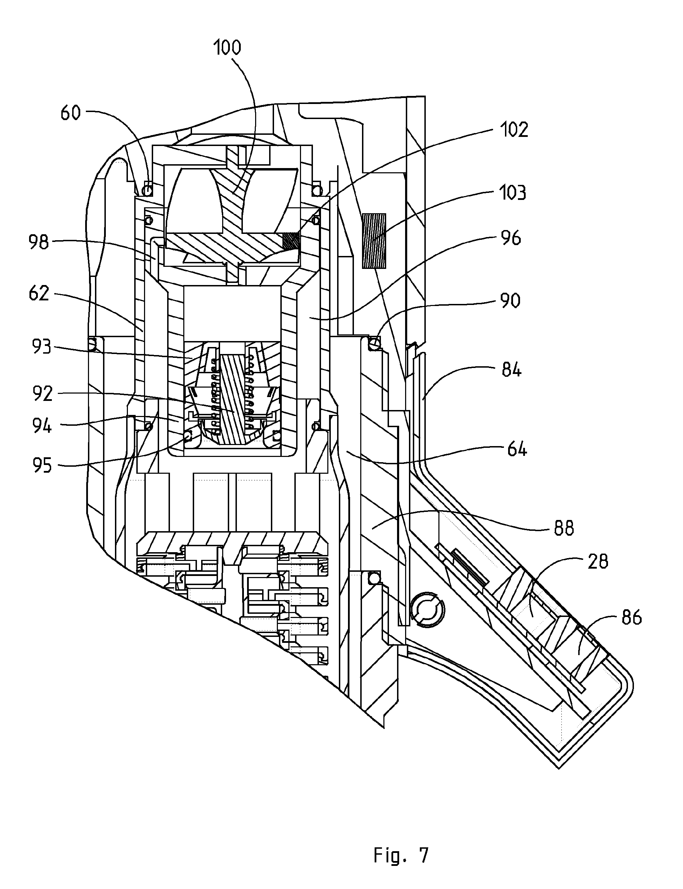

Das Leckageschutzmodul 16 ist in Figur 7 im Detail dargestellt. Es bildet eine Strömungsmessanordnung und umfasst ein Gehäuse 84. Das Gehäuse 84 umschließt das Display 28 mit Bedienelementen 86. Das Gehäuse 84 umschließt ferner ein rohrförmiges Armaturenteil 88. Das Armaturenteil 88 ist mit Dichringen 90 in den Stutzen 58 eingesteckt. In dem Armaturenteil 88 sitzt die bereits erwähnte Hülse 62. Die Hülse 62 ragt über das Armaturenteil 88 nach oben heraus. Dies ist in Figur 5 ebenfalls gut zu erkennen.

Man erkennt, dass sich der Ringraum 64 bis in den Zwischenraum zwischen dem Armaturenteil 88 und der Hülse 62 fortsetzt. Das Wasser kann also außen vom Einlass durch den Ringraum 64 nach unten fließen.

Im Innenraum der Hülse 62 ist ein Rückflussverhinderer in Form einer Patrone 93 mit einer Dichtung 95 angeordnet. Der Rückflussverhinderer 92 mit der Patrone 93 sitzt in einem koaxial angeordneten, ebenfalls im wesentlichen rohrförmigen Einsatzteil 94. Die Patrone 93 bildet am unteren Ende den Ventilsitz des Rückflussverhinderers 92. Der Rückflussverhinderer 92 öffnet in Auslassrichtung nach oben in Figur 2. Zwischen der Außenwandung des Einsatzteils 94 und der Innenwandung der Hülse 62 ist ein Bypass 96 gebildet. Der Bypass 96 führt an dem Rückflussverhinderer 92 vorbei und lässt einen geringen Strömungsanteil durch. Der Bypass 96 mündet in einer Minibohrung 98 in einem erweiterten oberen Bereich des Einsatzteils 94. Die durch die Minibohrung 98 durchgelassene Strömung hat aufgrund des geringen Querschnitts eine vergleichsweise hohe Strömungsgeschwindigkeit. Diese Strömung wird auf den äußeren Bereich einer Turbine 100 geleitet. Die Turbine 100 sitzt koaxial im Strömungskanal ebenfalls im oberen Bereich des Einsatzteils 94. Die Turbine 100 wird so auch bei geringen Strömungsmengen angetrieben. Bei größeren Strömungsmengen durch das Einsatzteil 94 öffnet der Rückflussverhinderer und treibt die Turbine 100 an. Der erweiterte obere Bereich des Einsatzteils 94 liegt mit einer Außenwandung an der Innenwandung der Hülse 62 an. Die gesamte Strömung fließt also entweder durch den Rückflussverhinderer 92 mittig durch das Einsatzteil durch die Turbine 100 oder außen durch den Bypass 96 und die Minibohrung 98 durch die Turbine. Die Turbine 100 dreht sich somit bei jeglicher Strömung.

Die Turbine 100 weist auf einem Turbinenflügel einen Magneten 102 auf. Dieser Magnet arbeitet auf bekannte Weise mit einem Reed-Kontakt 103 zusammen. Der Reed-Kontakt 103 erzeugt ein elektrisches Signal, welches ein Maß für die Anzahl der Umdrehungen der Turbine 100 und die Rotationsgeschwindigkeit ist. Diese kann zusammen mit den festen Größen der Turbinenabmessungen zur Auswertung über die Strömungsgeschwindigkeit und Volumenströme liefern.

Eine geeignete Auswerteschaltung ist auf Leckageschutz programmiert. Sie liefert ein Signal, wenn Leckage auftritt. Dies ist beispielsweise der Fall, wenn innerhalb sehr kurzer Zeit sehr große Volumenströme auftreten oder über einen langen Zeitraum ununterbrochen Volumenströme auftreten - auch zu Zeiten, wo gewöhnlich keine Volumenströme auftreten (nachts).

Wenn die Auswertung des elektrischen Signals ergibt, dass Leckage auftritt, wird es an die Motorsteuerung 52 weitergeleitet (Fig.2). Der Motor 54 wird dann so betätigt, dass das Kugelventil 46 schließt. Die Anordnung lässt dann kein Wasser mehr durch. Die Motorsteuerung 52, der Motor 54 und das zugehörige Betätigungselement sind Teil des Leckageschutzmoduls 16. Sie sind in das Gehäuse 84 integriert. Wenn also das Modul 16 eingesetzt wird, wird nicht nur eine Verbindung im Strömungsbereich zwischen den Stutzen 58 und 88 und der Hülse 62 mit dem inneren Stutzen 60 hergestellt, sondern auch das Betätigungselement des Motors an die Kugel des Kugelventils 46 gekoppelt.

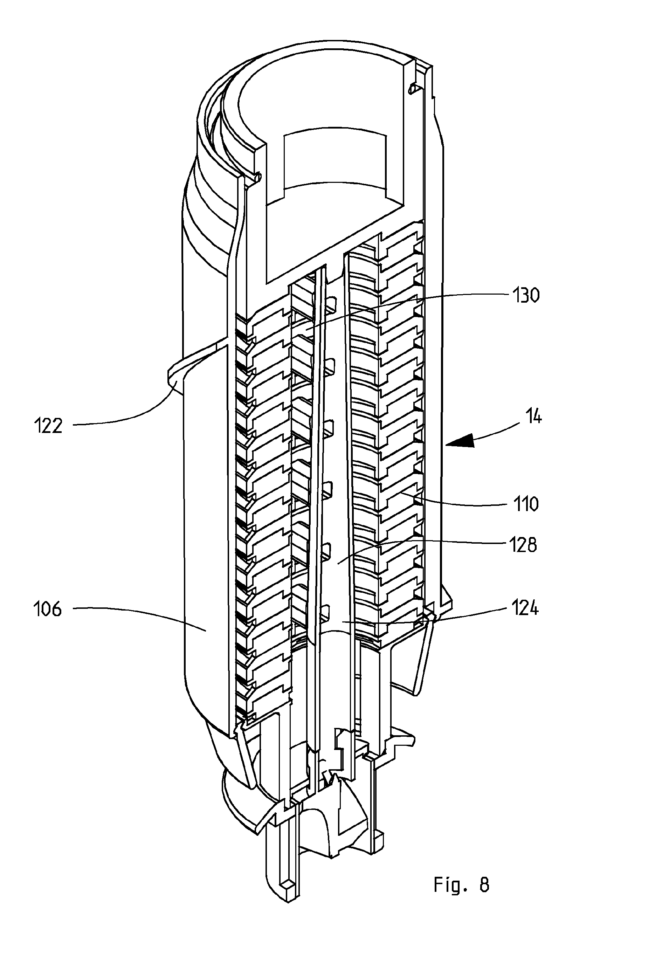

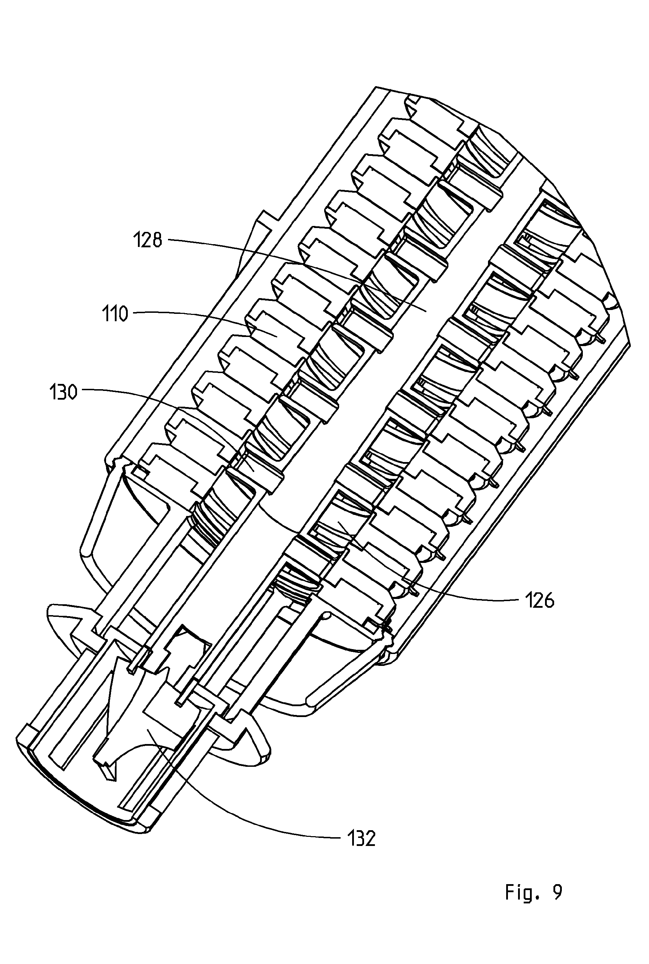

Unterhalb des Leckagemoduls 16 ist das Filtermodul 14 angeordnet. Das Filtermodul umfasst eine Filtertasse 104 und koaxial dazu eine Filterhülse 106. Die Filterhülse 106 mit dem Filter ist in Figur 8 und Figur 9 noch einmal im Detail dargestellt. Die Filterhülse 106 ragt nach oben aus der Filtertasse 104 hervor. Im vorliegenden Ausführungsbeispiel wird die Filtertasse in das Armaturenteil 88 eingesteckt. Dabei wird die Filterhülse 106 auf die Hülse 62 geschoben. Dadurch setzt sich der Ringraum 64 weiter bis zum Boden der Filtertasse 104 fort. Das Wasser fließt vom Einlass durch den Ringraum 64 zum Boden der Filtertasse 104. Dort ist ein Hohlraum 108 gebildet. In dem Hohlraum 108 fließt das Wasser nach innen und in ein Filterpaket 110. Im vorliegenden Ausführungsbeispiel besteht das Filterpaket aus einem Plattenfilter mit übereinander gelegten Siebscheiben.

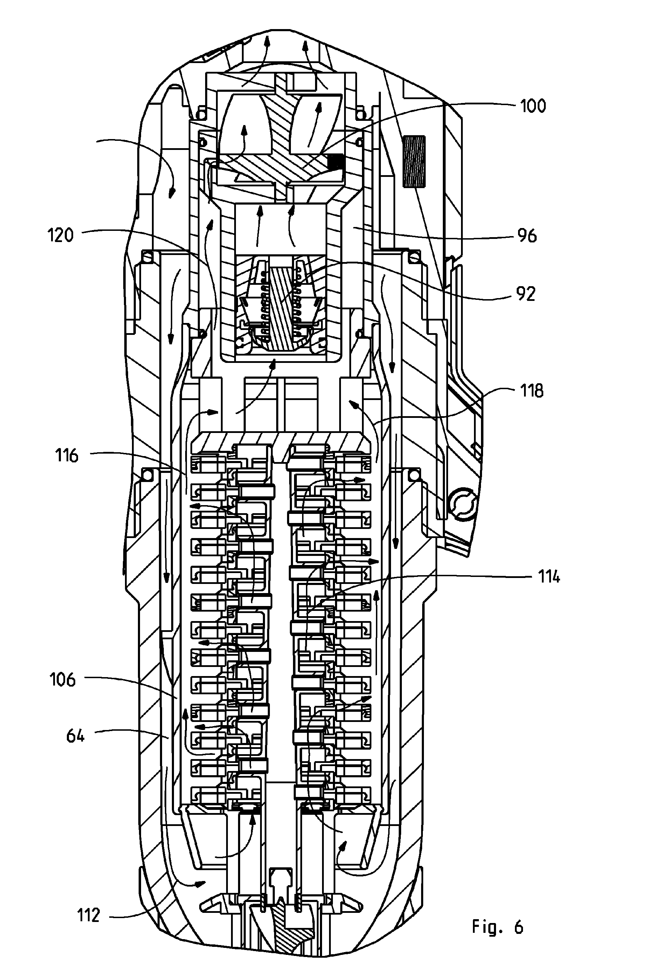

Figur 6 ist eine Darstellung der Strömungswege: Das ungefilterte Wasser fließt in dem Ringraum 64 nach unten und nach innen. Dies ist durch einen Pfeil 112 dargestellt. Dort auf die mit Pfeilen 114 illustrierte Weise durch den Plattenfilter und nach außen. Innerhalb der Filterhülse 106 fließt das Wasser wieder nach oben. Dies ist durch einen Pfeil 116 dargestellt. Oberhalb des Filterpakets 110 fließt das Wasser entsprechend den Pfeilen 118 und 120 entweder mittig durch den Rückflussverhinderer 92 oder durch den Bypass 96 zur Turbine 100.

Zur Halterung der Filterhülse 106 in ihere Position ist diese mit Rippen 122 versehen, von denen eine in Fig.2 und 6 sichtbar ist.

Zum Rückspülen der Anordnung wird ein im Filterboden vorgesehener Absperrhahn 124 geöffnet. Dann fließt das Wasser in umgekehrter Richtung durch das Filterpaket 110 und reißt Schmutzpartikel mit.

Figur 8 ist eine perspektivische Darstellung des Filterpakets 110. Innerhalb des von den Siebringsscheiben des Filterpakets 110 gebildeten Hohlraums 126 ist ein Kanalelement 124 angeordnet. Das Kanalelement 124 umfasst einen rohförmigen Mittelteil 128. Das Wasser fließt durch den Hohlraum 126 zwischen der Außenwandung des Kanalelements 128 und den Innenseiten der Siebringscheiben. Das Kanalelement 128 ist mit radialen, nach außen offenen Kanälen 130 versehen. Die Kanäle 130 erstrecken sich alternierend in verschiedener Höhe des rohrförmigen Mittelteils 128. Am ablaufseitigen, unteren Ende des rohrförmigen Mittelteils ist unterhalb des Filterpakets 110 ein Flügelelement 132 befestigt.

Wenn das Wasser in umgekehrter Richtung durch das Filterpaket 110 fließt, bewirkt die Strömung eine Drehkraft auf das Flügelelement 132. Diese wird auf das Kanalelement übertragen. Auf diese Weise dreht sich das Kanalelement im Rückspülbetrieb um seine Längsachse. Die Kanäle 130 verändern dabei ihre Winkelposition und saugen so Schmutzpartikel aus allen Winkelbereichen auf der Höhe des jeweiligen Kanals des Filterpakets.

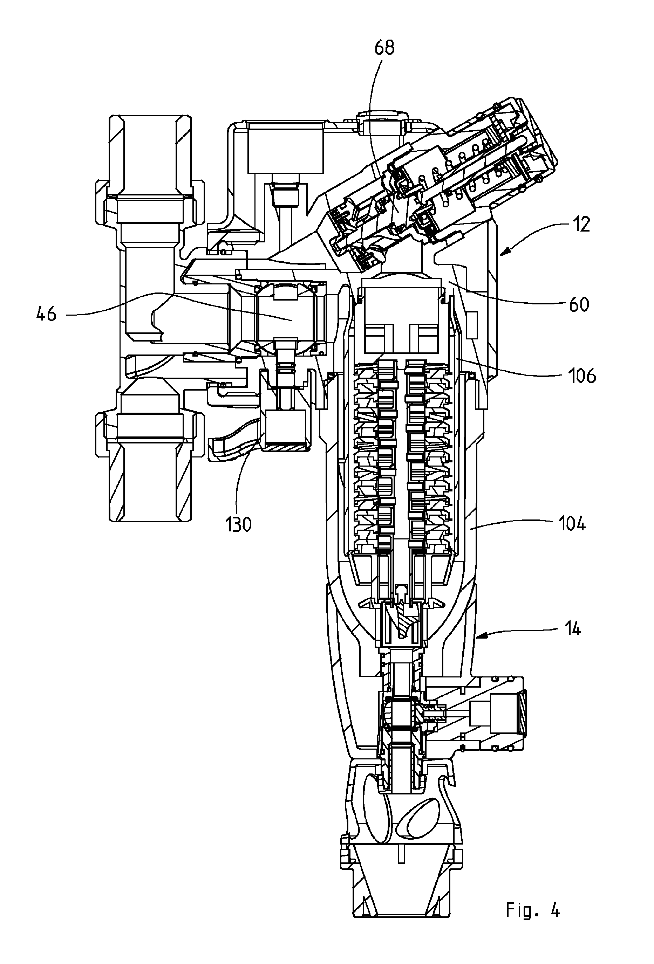

Figur 4 zeigt eine Anordnung aus dem Anschlussmodul 12 und dem Filtermodul 14 ohne Leckageschutz. Die Module 12 und 14 sind identisch wie zuvor beschrieben. Man erkennt, dass die Filtertasse 104 so ausgebildet ist, dass sie an den Stutzen 58 anschließbar ist. Die Filterhülse 106 liegt direkt an dem inneren Stutzen 60 an. Auf diese Weise wird das Wasser direkt vom Filter durch den Druckminderer 68 zum Auslass geleitet.

Der zum Leckageschutzmodul 16 gehörige Motor 54 wird durch einen Griff 130 zur Betätigung des Kugelhahns 46 ersetzt. Der Griff 130 ist gesondert aufzusetzen. Dann kann der Hahn von Hand geschlossen werden um beispielsweise den Filter oder den Druckminderer auszutauschen oder zu warten.

## Patentansprüche

1. Strömungsmessanordnung (16) zum Erfassen von untypischen Strömungszuständen für eine Druckminderer-Filter-Anordnung (10), die mit einem Einlass (20) und einem Auslass (22) und einem strömungsmäßig zwischen Einlass (20) und Auslass (22) angeordneten Filter (110) in einer Filteranordnung (104, 106, 110) ausgestattet ist und mit einem in einem Armaturengehäuse (56) angeordneten Druckminderer (68), **dadurch gekennzeichnet, dass** die Strömungsmessanordnung ein separates Modul (16) bildet, das zwischen das Armaturengehäuse (30, 48, 56) und die Filteranordnung (104, 106, 110) einsetzbar ist.

2. Strömungsmessanordnung nach Anspruch 1, **dadurch gekennzeichnet, dass** eine strömungsmessende Turbine (100) vorgesehen ist.

3. Strömungsmessanordnung nach Anspruch 2, **dadurch gekennzeichnet, dass** die Turbine (100) in ihrem äußeren Bereich mit einem Magnet (98) versehen ist, der mit einem Sensor zusammenwirkt, wobei der Sensor bei Vorbeistreichen des Magneten ein auswertbares, elektrisches Signal erzeugt.

4. Strömungsmessanordnung nach einem der vorgehenden Ansprüche, **dadurch gekennzeichnet, dass** ein erster Anschluss zum Verbinden mit einem Anschluss im Armaturengehäuse und ein koaxialer zweiter Anschluss zum Verbinden mit der Filteranordnung vorgesehen sind.

5. Strömungsmessanordnung nach Anspruch 4, **dadurch gekennzeichnet, dass** ein koaxial zwischen dem ersten und dem zweiten Anschluss angeordneter Rückflussverhinderer (92) vorgesehen ist, welcher in Auslassrichtung öffnet, und ein den Rückflussverhinderer umgehender Bypasskanal (96), der im äußeren Bereich der Turbine (100) mündet, so dass die Turbine von einer durch den Bypasskanal erfolgten Teilströmung die Turbine antreibbar ist.

6. Strömungsmessanordnung nach einem der vorgehenden Ansprüche, **dadurch gekennzeichnet, dass** Mittel zur Steuerung (52, 54) eines an dem Armaturengehäuse vorgesehenen Absperrventils (46) vorgesehen sind, mit welchen die Strömung durch die Anordnung insbesondere bei Auftreten untypischer Strömungszustände absperrbar ist.

7. Druckminderer-Filter-Anordnung (10) mit einem Einlass (20) und einem Auslass (22) und einem strömungsmäßig zwischen Einlass und Auslass angeordneten Filter (110) in einer Filteranordnung und einem in einem Armaturengehäuse angeordneten Druckminderer (68), **dadurch gekennzeichnet, dass**
(a) die Filteranordnung einen Anschluss aufweist, mit dem sie modulartig an einem hierfür vorgesehenen Anschluss an das Armaturengehäuse anschließbar ist; und
(b) eine Strömungsmessanordnung zur Erfassung untypischer Strömungszustände modulartig zwischen dem Anschluss an der Filteranordnung und dem Anschluss an dem Armaturengehäuse einsetzbar ist.

8. Druckminderer-Filter-Anordnung nach Anspruch 7, **dadurch gekennzeichnet, dass** der Filter (110) als Rückspülfilter mit einem Ablauf und Ablaufventil (124) ausgebildet ist, und die Anordnung von einem ersten Zustand, bei welcher das Wasser vom Einlass durch den Filter zum Auslass fließt, in einen zweiten Zustand schaltbar ist, bei welchem das Wasser bei geöffnetem Ablaufventil vom Einlass in umgekehrter Richtung durch den Filter zum Ablauf fließt.

9. Druckminderer-Filter-Anordnung nach Anspruch 8, **dadurch gekennzeichnet, dass**
(a) der Filter zusammen mit einer Hülse (106) in einer Filtertasse (104) angeordnet ist, so dass zwischen der Hülse und der Filtertasse ein äußerer Ringraum (64) gebildet ist und zwischen dem Filtermaterial (110) und der Hülse ein innerer Ringraum gebildet ist, und
(b) der in dem Gehäuse vorgesehene Anschluss einen zentralen Einlassanschluss aufweist, über den eine Verbindung zwischen Auslass und inneren Ringraum herstellbar ist und einen um den zentralen Einlassanschluss herum angeordneten, ringförmigen Auslassanschluss, über den eine Verbindung zwischen Einlass und äußerem Ringraum in der Filtertasse herstellbar ist.

10. Druckminderer-Filter-Anordnung nach einem der Ansprüche 7 bis 9, **dadurch gekennzeichnet, dass** das Armaturengehäuse eine Absperrung aufweist, welche einerseits manuell betätigbar ist und welches andererseits von einem an der Strömungsmessanordnung vorgesehenen Betätigungselement betätigbar ist.

11. Druckminderer-Filter-Modulbausatz enthaltend:
(a) ein erstes Modul mit einem Druckmindereregehäuse und einem Druckminderer;
(b) ein zweites Modul mit einer Filteranordnung, und
(c) ein drittes Modul mit einer Anordnung zum Erfassen von untypischen Strömungszuständen, wobei
(d) das dritte Modul zwischen dem ersten und dem zweiten Modul anschließbar ist, und
(e) das zweite ohne das dritte Modul direkt an das erste Modul anschließbar ist.
